# EUROPÄISCHE PATENTANMELDUNG

(11) **EP 1 037 025 A2**
(43) Veröffentlichungstag der Anmeldung: **20.09.2000**
(21) Anmeldenummer: 00104298.5
(22) Anmeldetag: 02.03.2000
(51) Int. Cl.: G01J 3/02, G01J 3/10

(54) **Tragbare Miniatur-Spektralsonde**

(30) Priorität: 05.03.1999 DE 19909631
(71) Anmelder: Heraeus Noblelight GmbH, 63450 Hanau (DE)
(72) Erfinder: Dietz, klaus-Jürgen, Dr., 65195 Wiesbaden (DE); Schröder, Uwe, 65189 Wiesbaden (DE)
(74) Vertreter: Kühn, Hans-Christian

(57) **Zusammenfassung**

Es ist eine tragbare Miniatur-Spektralsonde für die Messung spektrometrischer Daten einer Meßprobe bekannt, mit einem Gehäuse, das mit einem Austrittsfenster für das von einer Lichtquelle emittierte Licht versehen ist, und in dem die Lichtquelle für das Beleuchten der Meßprobe, ein Detektor für die Erfassung und Umsetzung optischer Signale in elektrische Signale, eine Abbildungsoptik zur Abbildung der Lichtquelle auf die Meßprobe und auf den Detektor, und eine Stromversorgungseinheit für Lichtquelle und Detektor. Um eine derartige tragbare Miniatur-Spektralsonde mit erweiterten Einsatzmöglichkeiten bereitzustellen, wird erfindungsgemäß vorgeschlagen, daß die Lichtquelle eine Miniatur-UV-Lampe umfaßt.

## Beschreibung

Die vorliegende Erfindung betrifft eine tragbare Miniatur-Spektralsonde für die Messung spektrometrischer Daten einer Meßprobe, mit einem Gehäuse, das mit einem Austrittsfenster für das von einer Lichtquelle emittierte Licht versehen ist, und in dem die Lichtquelle für das Beleuchten der Meßprobe, ein Detektor für die Erfassung und Umsetzung optischer Signale in elektrische Signale, eine Abbildungsoptik zur Abbildung der Lichtquelle auf die Meßprobe und auf den Detektor, und eine Stromversorgungseinheit für Lichtquelle und Detektor, angeordnet sind.

Eine derartige Miniatur-Spektralsonde wird beispielsweise als tragbares Spektrometer unter der Bezeichnung "Pen-Type Farbmeßgerät" von der Firma Dr. Bruno Lange GmbH, Industriemeßtechnik, Düsseldorf angeboten. Es handelt sich dabei um ein batteriebetriebenes, handliches Spektrometer für die Farbmessung mit einem stiftförmigen Gehäuse. Das Gehäuse, das im Bereich seiner Stiftspitze ein Austrittsfenster für die Meßstrahlung aufweist, an dem die Meßprobe entlanggeführt wird, umschließt eine Halogenlampe, deren Licht mittels eines Lichtwellenleiters auf die die Meßprobe, dort reflektiert und über eine Optik auf den Detektor geleitet wird. Der Detektor setzt die optischen Signale in elektrische Impulse um, die anschließend von einem Mikroprozessor ausgewertet und mittels LCD-Anzeige angezeigt werden. Weiterhin ist innerhalb des Gehäuses ein Meßwertspeicher vorhanden, der auch von einem externen Rechner ausgelesen und beschrieben werden kann. Hierzu weist das Gehäuse einen Rechner- und einen Druckeranschluß auf.

Die vorliegende Erfindung bezieht sich ausdrücklich nicht auf ortsfeste Standgeräte, sondern nur auf tragbare Miniatur-Spektralsonden, wie die eingangs Beschriebene, die durch ihre Handlichkeit die Möglichkeit eines Vororteinsatzes erlauben.

Der Erfindung liegt die Aufgabe zugrunde, eine tragbare Miniatur-Spektralsonde mit erweiterten Einsatzmöglichkeiten anzugeben.

Diese Aufgabe wird ausgehend von der Miniatur-Spektralsonde der eingangs genannten Gattung erfindungsgemäß dadurch gelöst, daß die Lichtquelle eine Miniatur-UV-Lampe umfaßt.

Die UV-Lampe ermöglicht Vorortmessungen im ultravioletten Spektralbereich. Die erfindungsgemäße Miniatur-Spektralsonde erweitert somit den Einsatzbereich des bekannten MiniaturSpektrometers, mit dem spektroskopische Messungen lediglich im sichtbaren Wellenlängenbereich möglich sind. Für Messungen im UV-Spektralbereich waren bisher ortsfeste Standgeräte üblich. Für diese Standgeräte werden UV-Lampen in Form von Quecksilberdampflampen oder Deuteriumlampen eingesetzt, die aufgrund ihrer Größe und für den Betrieb erforderlichen Energieversorgung für den Einsatz in Handgeräten nicht geeignet sind. Bei der vorliegenden Erfindung wird beispielsweise eine Miniatur-Deuteriumlampe eingesetzt, wie sie in de deutschen Patentanmeldung DE-A 195 47 519 beschrieben ist. Daneben kann die Miniatur-Spektralsonde auch noch eine oder mehrere andere Lampen, beispielsweise für Messungen im sichtbaren oder im infraroten Spektralbereich umfassen.

Für den elektrischen Anschluß der Miniatur-UV-Lampe genügt eine erneuerbare, tragbare, handelsübliche Stromversorgungseinheit, beispielsweise eine Batterie oder ein sogenanntes Akku, wobei bei letzterem auch ein Anschluß für das Aufladen des Akkus oder ein direkter Netzanschluß über das Akku vorgesehen sein kann. Die geringe Leistungsaufnahme der Miniatur-UV-Lampe geht mit einer geringen Erwärmung des Gehäuses beim Betrieb der Lampe, mit einer kleineren Verlustleistung und dementsprechend mit einer höheren Effizienz einher.

Im Detektor werden optische Signale in elektrische Impulse umgesetzt. Diese können gespeichert werden, wobei für diesen Fall ein Speicherelement vorzusehen ist. Alternativ oder zusätzlich können die elektrischen Impulse auch direkt angezeigt werden, wobei für diesen Fall das Gehäuse der Miniatur-Spektralsonde eine optische Anzeige umfaßt. Es kann auch eine geeignete Auswerteeinheit vorgesehen sein, wie sie bei dem gattungsgemäßen Spektrometer vorhanden ist.

Die erfindungsgemäße Miniatur-Spektralsonde kann beispielsweise für spektroskopische Messungen im Reflektionsverfahren und im Transmissionsverfahren eingesetzt werden. Bei den Meßproben kann es sich um Feststoffe, Gase und Flüssigkeiten handeln. Die Spektralsonde ist auch für einen Einsatz als Tauchsonde geeignet.

Vorzugsweise emittiert die Miniatur-UV-Lampe ein Lichtwellenspektrum, das ein Kontinuum im ultravioletten Spektralbereich umfaßt. Bei dem Kontinuum kann es sich um ein Rekombinationskontinuum oder um ein Dissoziationskontinuum handeln. In jedem Fall erleichtert das kontinuierliche Wellenlängenspektrum einen universellen Einsatz der erfindungsgemäßen MiniaturSpektralsonde für Messungen im ultravioletten Spektralbereich.

In diesem Zusammenhang wird der Einsatz einer UV-Lampe in Form einer Miniatur-Deuteriumlampe bevorzugt. Eine für diesen Zweck besonders geeignete Deuteriumlampe wird in der DE-A 195 47 519 beschrieben. Das Spektrum von Deuteriumlampen weist im Wellenlängenbereich zwischen etwa 200 bis 350 nm ein Kontinuum auf. Dieses gewährleistet eine stabile UV-Emission der Deuteriumlampe macht sie daher für analytische Messungen besonders geeignet.

Als besonders günstig hat sich erwiesen, die Deuteriumlampe durch Hochfrequenz anzuregen. Geeignete Frequenzen dafür liegen bei etwa 500 Hz und darüber. Aufgrund der Hochfrequenzanregung kann das bei den üblichen Deuteriumlampen erforderliche Vorheizen entfallen. Dadurch ist die erfindungsgemäße Miniatur-Spektralsonde sofort nach dem Einschalten betriebsbereit. Wartezeiten entfallen somit.

Als vorteilhaft hat es sich auch erwiesen, daß die elektrische Leistungsaufnahme der UV-Lampe 10 Watt oder weniger beträgt. Dadurch wird der Einsatz handelsüblicher Stromversorgungseinheiten, wie Batterien oder Akkus und den damit einhergehenden Vorteilen hinsichtlich geringerer Erwärmung und höherer Leistungseffizienz ermöglicht, wie dies oben näher erläutert ist. Darüberhinaus verursacht die im Vergleich zu den üblichen UV-Spektrometern geringe Leistung der Miniatur-UV-Lampe eine deutlich geringere Strahlenschädigung der Abbildungsoptik. Für die Abbildungsoptik werden vorzugsweise Linsen oder Lichtleiter aus Quarzglas eingesetzt.

Nachfolgend wird die Erfindung anhand von Ausführungsbeispielen und einer Zeichnung näher erläutert. In der Zeichnung zeigen im einzelnen in schematischer Darstellung:
- **Figur 1**:: ein tragbares Spektralphotometer gemäß der Erfindung in einer ersten Ausführungsform, und
- **Figur 2**:: ein tragbares Spektralphotometer gemäß der Erfindung in einer zweiten Ausführungsform.

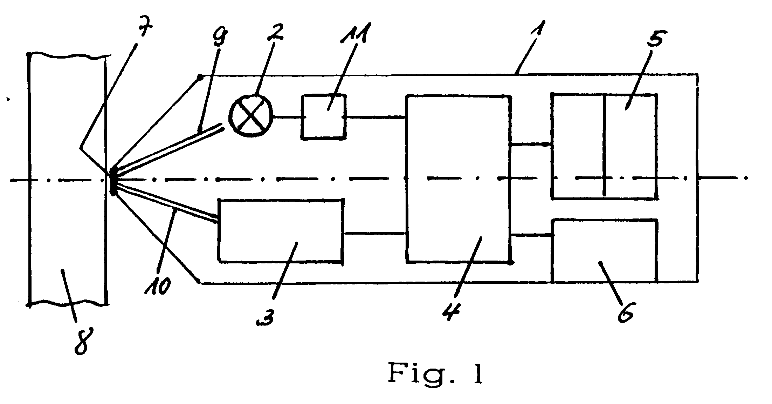

Bei dem in **Figur 1** dargestellten Spektralphotometer sind innerhalb eines Schreibstift-ähnlichen Kunststoffgehäuses 1 eine Miniatur-Deuteriumlampe 2, ein Detektor 3, ein Mikroprozessor 4, zwei handelsübliche Batterien 5 und ein Ausgang 6 zum Anschluß eines externen Rechners untergebracht. Im Bereich seiner Spitze weist das Gehäuse 1 ein Austrittsfenster 7 aus Quarzglas auf, vor dem sich eine Meßprobe 8 befindet. Die UV-Strahlung der Miniatur-Deutenumlampe 2 wird mittels eines ersten Lichtwellenleiters 9 auf das Austrittsfenster 7 und damit auf die Meßprobe 8 geleitet, dort reflektiert und über einen zweiten Lichtwellenleiter 10 dem Detektor 3 zugeführt. Der Detektor 3 setzt die erhaltenen optischen Signale in elektrische Impulse um, die anschließend von dem Mikroprozessor 4 ausgewertet und gleichzeitig gespeichert werden. Die im Mikroprozessor 4 gespeicherten Daten können mittels eines an den Ausgang 6 angeschlossenen externen Rechners ausgelesen oder aktualisiert werden. Bei der Miniatur-Deuteriumlampe 2 handelt es sich um eine Deuteriumlampe mit partitioniertem Entladungsraum, wie sie aus der DE-A 195 47 813 bekannt ist. Sie wird über die Batterien 5 und einen Hochfrequenzgenerator 11 mit einer elektrischen Leistung von 15 Watt und einer Frequenz von 30 kHz betrieben. Das Spektrum der Miniatur-Deuteriumlampe 2 weist im Wellenlängenbereich zwischen etwa 200 bis 350 nm ein Kontinuum auf.

Das Spektralphotometer gemäß Figur 1 hat insgesamt eine Länge von ca. 15 cm und einen Durchmesser von ca. 5 cm. Es ist handlich und aufgrund des Batteriebetriebes vor Ort für UV-spektrometrische Messungen direkt einsetzbar.

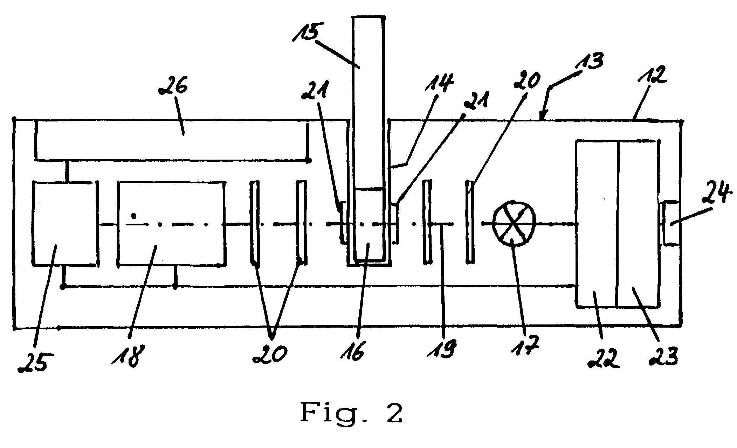

Die in **Figur 2** dargestellte Ausführungsform eines ertindungsgemäßen Spektralphotometers für eine spektrometrische Analyse nach dem Transmissionsverfahren weist ein flaches Rechteck-Gehäuse 12 auf, das auf seiner Oberseite 13 mit einem Spalt 14 versehen ist, der zur Aufnahme einer Analyse-Karte 15, die eine Meßprobe 16 trägt, ausgelegt ist. Innerhalb des Gehäuses 12 befindet sich auf der einen Seite der Analyse-Karte 15 eine Miniatur-Deuteriumlampe 17, und auf der anderen Seite ein Detektor 18. Im Strahlengang 19 zwischen Deuteriumlampe 17 und Detektor 18 sind optische Bauelemente 20, wie optische Linsen und Filter, angeordnet. In den Bereichen, in denen der Strahlenganges 19 den Spalt 14 durchquert, ist das Gehäuse 12 beiderseits mit Quarzglas-Fenstern 21 verschlossen. Die Miniatur-Deuteriumlampe 17 ist über einen Hochfrequenzgenerator mit einem Akku-Block 23 verbunden, der einen Ausgang 24 zum Aufladen des Akkus sowie für den direkten Netzbetrieb des Spektralphotometers aufweist. Weiterhin ist der Akku 23 mit dem Detektor 18, und dieser mit einem Mikroprozessor 25 für die Speicherung, Auswertung und Aufbereitung der Analyse-Daten verbunden. Die vom Mikroprozessor 25 ermittelten Meßergebnisse werden unmittelbar mittels einer LCD-Anzeige 26 dargestellt.

Zur spektrometrischen Analyse der Meßprobe 16 wird die Analysekarte 15 in den Spalt 14 eingeführt. Die UV-Strahlung der Miniatur-Deuteriumlampe 17 wird mittels der optischen Bauteile 20 gefiltert und auf die Meßprobe 16 fokussiert. Nach Transmission der Meßprobe 16 gelangt die Strahlung über die optischen Bauteile 20 zum Detektor 18, der die erhaltenen optischen Signale in elektrische Impulse umsetzt, die anschließend vom Mikroprozessor 18 ausgewertet und mittel der LCD-Anzeige 26 angezeigt werden.

Bei der Miniatur-Deuteriumlampe 17 handelt es sich um eine Deuteriumlampe mit partitioniertem Entladungsraum, wie sie aus der DE-A 195 47 813 bekannt ist. Sie wird über das Akku 23 und den Hochfrequenzgenerator 22 mit einer elektrischen Leistung von 20 Wall und einer Frequenz von 50 kHz betrieben. Das Spektrum der Miniatur-Deuteriumlampe 17 weist im Wellenlängenbereich zwischen etwa 200 bis 350 nm ein Kontinuum auf.

Das Spektralphotometer gemäß Figur 2 hat insgesamt eine Länge von ca. 20 cm, eine Breite von ca. 10 cm und eine Höhe von etwa 4 cm. Es ist handlich und sein Akkubetrieb ermöglicht UV-spektrometrische Messungen direkt vor Ort.

## Patentansprüche

1. Tragbare Miniatur-Spektralsonde für die Messung spektrometrischer Daten einer Meßprobe, mit einem Gehäuse, das mit einem Austrittsfenster für das von einer Lichtquelle emittierte Licht versehen ist, und in dem die Lichtquelle für das Beleuchten der Meßprobe, ein Detektor für die Erfassung und Umsetzung optischer Signale in elektrische Signale, eine Abbildungsoptik zur Abbildung der Lichtquelle auf die Meßprobe und auf den Detektor, und eine Stromversorgungseinheit für Lichtquelle und Detektor, angeordnet sind, dadurch gekennzeichnet, daß die Lichtquelle eine Miniatur-UV-Lampe (2; 17) umfaßt.

2. Miniatur-Spektralsonde nach Anspruch 1, dadurch gekennzeichent, daß die UV-Lampe (2; 17) ein Lichtwellenspektrum emittiert, das ein Kontinuum im ultravioletten Spektralbereich umfaßt.

3. Miniatur-Spektralsonde nach Anspruch 1oder 2, dadurch gekennzeichent, daß die UV-Lampe eine Deuteriumlampe (2; 17) ist.

4. Miniatur-Spektralsonde nach Anspruch 2, dadurch gekennzeichent, daß die Deuteriumlampe (2:17) durch Hochfrequenz angeregt wird.

5. Miniatur-Spektralsonde nach einem der Ansprüche 1 bis 4, dadurch gekennzeichent, daß die elektrische Leistungsaufnahme der UV-Lampe (2; 17) 10 Watt oder weniger beträgt.
